(19) Europäisches Patentamt
European Patent Office
Office européen des brevets

(11) **EP 1 862 771 B1**

(12) **FASCICULE DE BREVET EUROPEEN**

(45) Date de publication et mention
de la délivrance du brevet:
**13.01.2016 Bulletin 2016/02**

(51) Int Cl.:
***G01D 5/244*** *(2006.01)*

(21) Numéro de dépôt: **06360021.7**

(22) Date de dépôt: **31.05.2006**

(54) **Codeur angulaire optique avec detection du faux-rond**

Optischer Winkelcodierer mit Exzentrizitätsdetektion

Optical angular enoder with detection of eccentricity

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**05.12.2007 Bulletin 2007/49**

(73) Titulaires:
• **Delphi Technologies, Inc.**
  **Troy, MI 48007 (US)**
• **UNIVERSITE LOUIS PASTEUR**
  **67000 Strasbourg (FR)**

(72) Inventeurs:
• **Tupinier, Laurent**
  **Reichstett 67116 (FR)**
• **Michel, Johan**
  **Illkirch 67400 (FR)**
• **Ndao, Mandiaye**
  **Strasbourg 67000 (FR)**
• **Marroux, Olivier**
  **Angers 49000 (FR)**
• **Tritschler, Paul Antoine**
  **Illkirch 67400 (FR)**
• **Kress, Bernard**
  **Neubourg 67350 (FR)**

(74) Mandataire: **Delphi France SAS**
  **Patent Department**
  **22, avenue des Nations**
  **CS 65059 Villepinte**
  **95972 Roissy CDG Cedex (FR)**

(56) Documents cités:
DE-A1- 2 166 683    DE-A1- 3 321 482
DE-A1- 3 801 413    GB-A- 2 210 525
JP-A- 57 203 902    JP-A- 57 203 905
JP-A- 60 203 814    JP-A- 2002 257 595
JP-A- 2003 057 074  US-A- 4 928 009
US-A- 5 428 217     US-A1- 2005 168 187
US-A1- 2006 061 489  US-B1- 6 642 507

## Description

La présente invention concerne un dispositif et un procédé de détection et de mesure du faux-rond sur un capteur d'angle comportant un disque support de moyens de codage angulaire solidaire d'un arbre tournant.

L'exemple qui sert de fil conducteur à la présente description est la colonne de direction d'un véhicule. L'existence du faux-rond, qui résulte directement de la fabrication de la colonne de direction, fausse la mesure angulaire en accélérant tantôt la rotation et en la ralentissant parfois. La courbe de l'angle mesuré en fonction de l'angle réel n'est donc pas linéaire. Le système tournant, notamment constitué de la colonne de direction et du disque support des moyens de codage angulaire, n'étant pas un système homocinétique, il est nécessaire de mesurer le faux-rond pour effectuer une correction d'angle en vue de linéariser le signal en sortie.

Jusqu'ici, le moyen de remédier à ce problème était réalisé principalement mécaniquement, c'est-à-dire que des solutions mécaniques extrêmement précises étaient mises en oeuvre, avec une incidence économique, et par conséquent industrielle, tout à fait défavorable.

La présente invention est basée non pas sur la mise en place de systèmes mécaniques d'une grande précision, mais sur la mesure du faux-rond en direct, mesure suivie d'une correction logicielle. Économiquement, une telle solution est beaucoup plus favorable que les solutions mécaniques, l'élaboration des logiciels de calcul étant actuellement économiquement intéressante. Par ailleurs, un tel logiciel se duplique facilement, et permet des modifications / améliorations aisées, ce qui accroît encore l'intérêt d'une solution logicielle. Celle-ci, pour être mise en oeuvre, doit néanmoins s'appuyer sur des configurations matérielles également développées dans le cadre de la présente invention.

Selon une première version ne faisant pas partie de l'invention, le dispositif de détection du faux-rond sur un capteur d'angle, comportant comme mentionné auparavant un disque support de moyens de codage angulaire solidaire d'un arbre tournant, présente au surplus au moins un système optique fixe doté d'une source de lumière cohérente émettant un faisceau interférant avec les moyens de codage angulaire du disque support en vue de coder sa position angulaire, un diaphragme délimitant ledit faisceau avant interférence et un photodétecteur du faisceau modulé après interférence, et il se caractérise en ce qu'il comporte deux systèmes optiques disposés à 90° l'un de l'autre.

L'existence des deux systèmes optiques, outre qu'elle permet la mesure du faux-rond d'une manière qui sera envisagée plus en détail dans la suite du texte, procure une redondance qui rend le capteur angulaire plus fiable. En bref, cette version permet un calcul d'un angle moyen à partir duquel s'effectue la correction théorique.

Selon une variante au dispositif précédent, ne faisant pas partie de l'invention, faisant intervenir une unique source de lumière, le disque comporte une piste circulaire centrée radialement en au moins une de ses positions angulaires par rapport au faisceau de lumière collimaté incident, et un photodétecteur orienté radialement.

Dans ce cas, de préférence, ladite piste est opaque et de largeur constante. Il s'agit en l'espèce d'une technique classique de modulation de signal lumineux par ombrage.

Selon une autre variante possible ,faisant partie de l'invention, utilisant de la lumière cohérente de type laser, le disque comporte une piste circulaire composée de cellules de codage à hologrammes diffractifs bidimensionnels générés par ordinateur et générant sur chaque cellule un code angulaire invariant dans une direction tangentielle au déplacement du disque, et un code radial différant selon le positionnement radial du faisceau de lumière relativement à ladite piste.

On code en fait simultanément le mouvement tangentiel et le mouvement radial avec la même méthode. L'information tangentielle ne varie pas, quelle que soit la position radiale, lorsque l'on reste à l'intérieur de la même cellule de codage. En revanche, l'information radiale change. La cellule est subdivisée à cet effet, dans une direction radiale, en n secteurs produisant des codes radiaux distincts.

Selon encore une variante possible, ne faisant pas partie de l'invention, le dispositif de détection du faux-rond de l'invention se caractérise en ce que le disque comporte des cellules de codage régulièrement espacées sur sa périphérie et munies d'hologrammes diffractifs identiques diffractant la lumière incidente en un signal comportant des taches s'orientant en une ligne, ledit hologramme comportant une modulation, sous forme d'une rayure ou de plusieurs rayures identiques disposées parallèlement, qui module le signal diffracté en changeant l'orientation de la ligne de taches selon la position relative du faisceau incident et de l'hologramme, ladite ligne étant toujours perpendiculaire à la tangente à la ou aux rayures, la position du centre de la tache diffractive d'ordre 0 restant inchangée, la ou lesdites rayure(s) étant orientée(s) dans les cellules de telle sorte qu'une modification radiale de la position relative du faisceau de lumière incidente et de l'hologramme modifie l'orientation de la ligne de taches, un photodétecteur étant disposé de manière à correspondre au déplacement d'une des taches de diffraction, de préférence d'ordre supérieur ou égal à 1 en valeur absolue.

Le principe qui est à la base de cette solution repose sur l'interférence du faisceau laser avec une modulation, c'est à dire un motif de courbure régulière. Le suivi du mouvement d'une tache lumineuse, qui se déplace avec la normale à la courbure de la rayure en tout point, permet de connaître la position relative du faisceau et de la cellule. La résolution et la précision de ce suivi sont réglées notamment par la forme des rayures (variation du rayon de courbure s'il existe) et la finesse des cellules de lecture du photodétecteur.

Une autre variante encore, ne faisant pas partie de l'invention, consiste à utiliser un disque qui comporte des cellules de codage régulièrement espacées sur la périphérie et munie de réseaux à rayures générant une tâche dont la position sur le photodétecteur est fonction de la position relative faisceau incident / cellule de codage.

La position sur le photodétecteur est traduite par un microcontrôleur en excentration par rapport au centre de rotation idéal, permettant ensuite la correction de l'angle.

De préférence, la ou les rayures striant les hologrammes est (sont) un (des) arc(s) de cercle dont le(s) rayon(s) est (sont) orienté(s) sensiblement parallèlement à la tangente au déplacement de la cellule de codage.

Dans ce cas, le photodétecteur est orienté sensiblement radialement par rapport au disque support des moyens de codage angulaire. En d'autres termes, le photodétecteur comporte des cellules de détection alignées dans la direction de la tangente au déplacement d'une tache d'ordre supérieur ou égal à 1 envaleur absolue dans le cas de l'hologramme modulé par des rayures. Comme mentionné auparavant, selon une application possible, le disque du capteur d'angle est fixé à la colonne de direction d'un véhicule automobile.

L'invention concerne également un procédé de détection du faux-rond au moyen d'un dispositif comportant deux systèmes optiques fixes disposés à 90° l'un de l'autre, et qui se caractérise à titre principal par les étapes suivantes : - mesure des angles x1 (t) et x2(t) par les deux systèmes optiques à l'instant t;

- calcul de (x1 (t) + x2(t) - 90° + ξ) /2 où ξ représente l'erreur de positionnement entre les deux systèmes optiques.

L'invention va à présente être décrite plus en détail, en référence aux figures annexées, pour lesquelles :

- la figure 1 représente un schéma explicatif du problème du faux-rond dans une colonne de direction ;
- la figure 2 est une vue en perspective d'une solution ne faisant pas partie de l'invention à deux systèmes optiques fixes ;
- la figure 3 montre un disque de codage muni d'une piste périphérique opaque permettant la modulation du faisceau incident selon la variation du faux-rond ;
- la figure 4 explicite la mesure du faux-rond dans une telle configuration ;
- la figure 5 schématise le codage obtenu à l'aide d'une solution à cellules de codage à hologrammes diffractifs bidimensionnels faisant partie de l'invention; et
- la figure 6 représente schématiquement le fonctionnement d'une solution, ne faisant pas partie de l'invention, à modulation changeant l'orientation d'une ligne de taches diffractives produites par l'hologramme inclus dans la cellule qui en est munie.

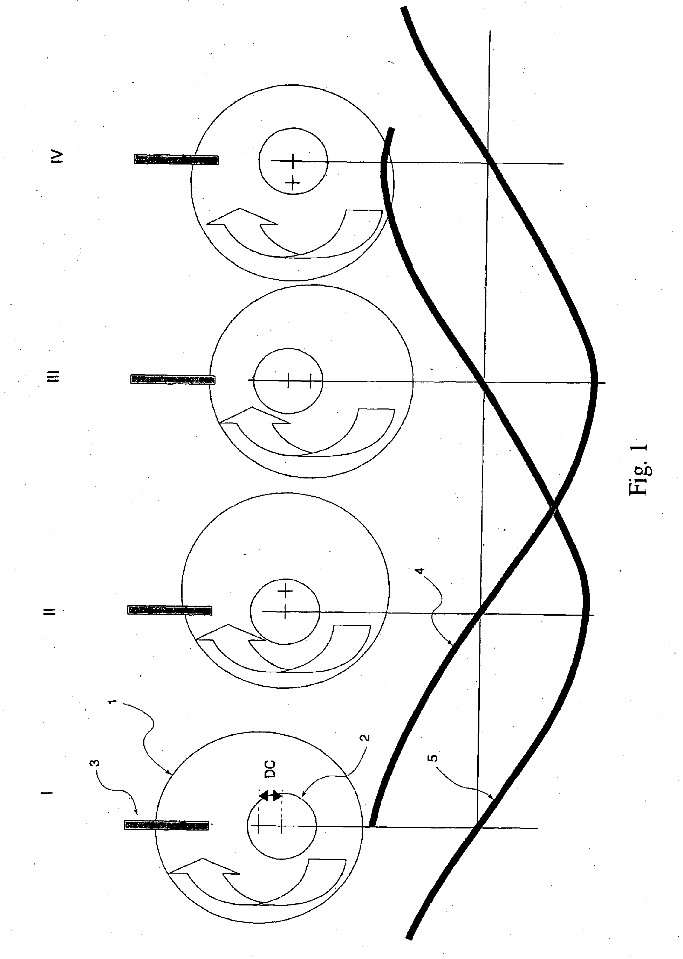

En référence à la figure 1, un disque (1) support du moyen de codage est solidarisé à une colonne de direction (2). Le faux-rond est représenté par la distance DC. Le diagramme de la figure 1 montre l'ensemble tournant constitué du disque support (1) et de la colonne de direction (2) dans quatre phases de rotation distinctes, situées à 90° l'une de l'autre. Un photodétecteur (3) est prévu pour la mesure du faux-rond DC. Dans la direction radiale de la mesure effectuée par ce photodétecteur, le signal est celui qui est représenté par la courbe en grisé (4). Le faux-rond DC est mesuré et maximal mais en sens contraire respectivement dans les phases I et III, alors qu'il est nul dans les phases II et IV. La courbe de correction (5) apparaît en noir. Elle permet de corriger le faux-rond tel que mesuré, quand cela est nécessaire, c'est-à-dire dans les phases I et III.

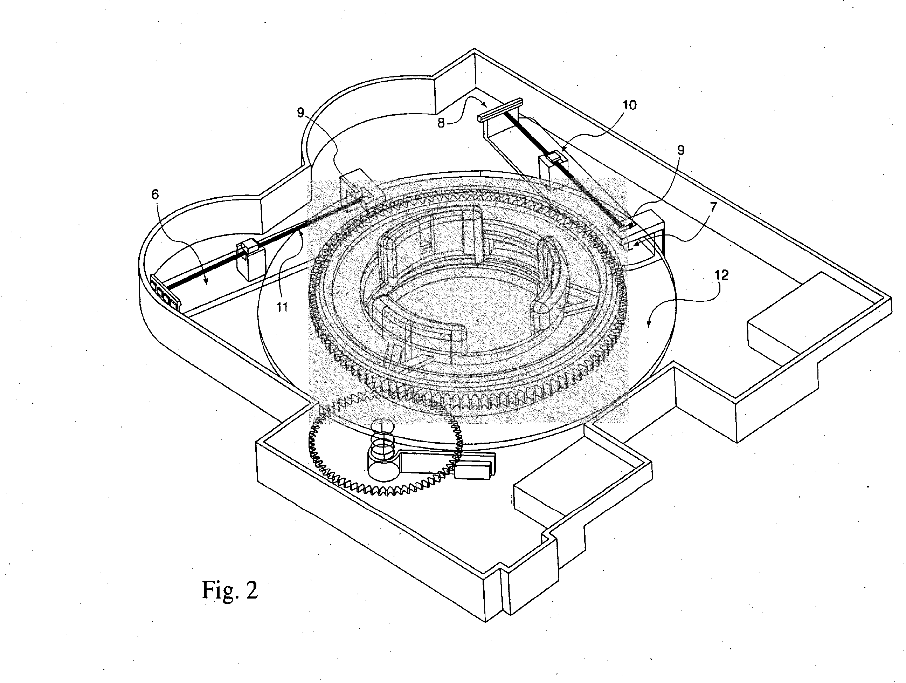

En référence à la figure 2, deux systèmes optiques identiques (6) fixés à un bâti sont placés à 90° l'un de l'autre. Ils se composent chacun d'une diode laser (7), d'un photodétecteur (8), d'un miroir (9) réorientant le faisceau (11) à partir de la diode (7) à destination du photodétecteur (8). Un filtre spatial (10) est également prévu sur le trajet du faisceau (11).

Ces deux systèmes optiques (6) permettent, en deux endroits, la mesure de la position angulaire de la colonne de direction (non représentée) par coopération avec des moyens de codage situés sur le disque (12). Ces moyens de codage consistent en l'espèce en des cellules de codage à hologrammes diffractifs modulant le faisceau incident en un code optique numérique correspondant bijectivement à une unique cellule de codage.

La correction du faux-rond se fait ensuite en faisant la moyenne entre ces deux angles, en utilisant par exemple la formule suivante :

$$\alpha \, (t) = (\alpha_1 \, (t) + \alpha_2 \, (t) - 90° + \xi) \, / \, 2$$

ξ représentant en l'occurrence l'erreur de l'écart de positionnement entre les deux systèmes optiques (6). Le calcul de la moyenne permet de limiter l'erreur due au faux-rond. Le cas échéant, d'autres algorithmes permettent encore d'affiner cette correction.

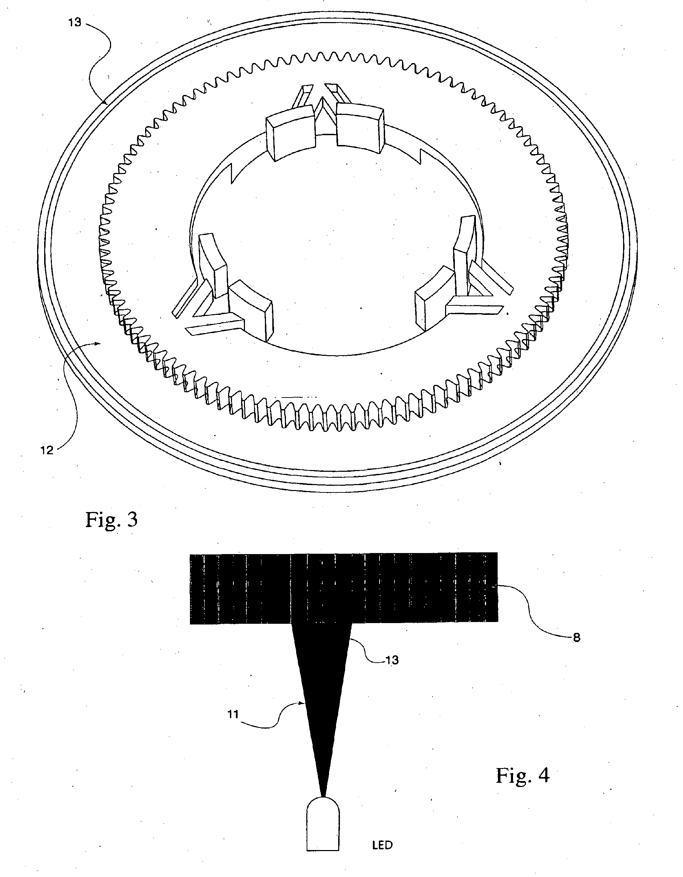

La figure 3, concernant une variante à la configuration précédente, ne faisant pas partie de l'invention montre un disque (12) extrait du boîtier du capteur d'angle, et doté d'une piste (13) opaque permettant la mesure du faux-rond d'une manière explicitée en figure 4. Le faisceau lumineux incident (11) interfère avec la piste opaque (13) de telle sorte que le signal modulé par cette interférence puisse refléter le faux-rond sur le photodétecteur (8). Ainsi, par exemple, si la position montrée en figure 4 est celle qui prévaut en l'absence de faux-rond, avec un centrage de la piste (13) dans le faisceau incident (11), les cellules du photodétecteur (8) illuminé sont distinctes.

En supposant que la piste opaque (13) ne soit plus centrée dans le faisceau (11), le résultat pourrait schématiquement être que deux cellules contiguës sont illuminées, respectivement d'un côté ou de l'autre de la piste (13) selon la phase de la rotation du disque (12). Le calcul logiciel du faux-rond et de sa correction résulte de la localisation des cellules de détection illuminées.

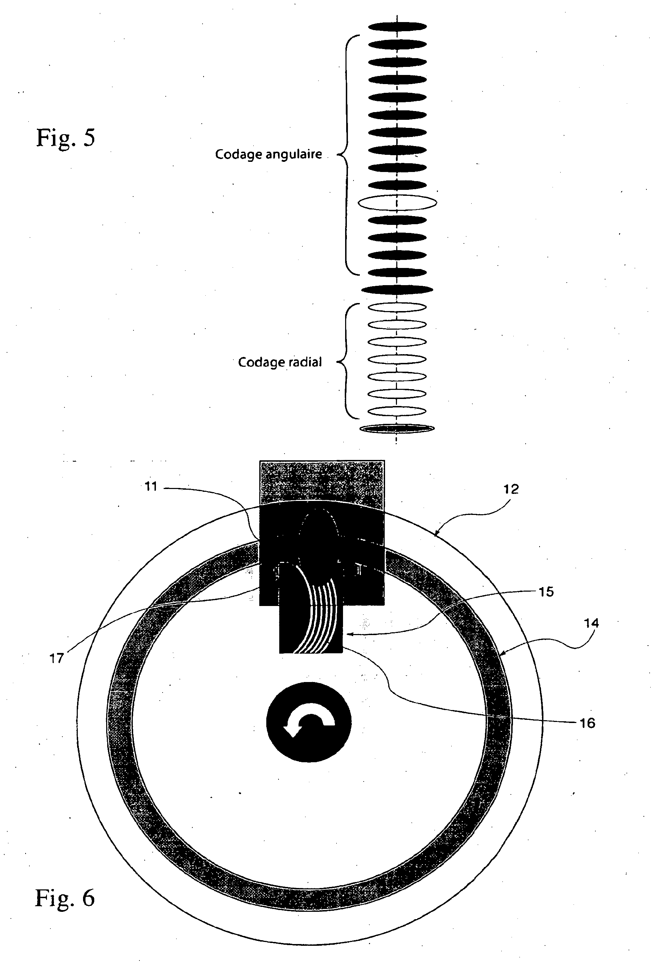

Selon une variante, faisant partie de l'invention, la piste opaque (13) est remplacée par une piste comportant des cellules de codage à hologrammes diffractifs bidimensionnels, c'est-à-dire codant simultanément le mouvement tangentiel et le mouvement radial du faisceau de lumière incidente (11) par rapport à ladite cellule. Le résultat, en termes de code optique, est représenté en figure 5. Si l'on subdivise, radialement, chaque cellule en par exemple 128 secteurs ($2^7$), sept taches lumineuses, et par conséquent sept bits de codage sont affectées au codage radial. Le codage angulaire est quant à lui réalisé de manière connue.

En référence à la figure 6, une autre version encore permettant la détection du faux-rond, ne faisant pas partie de l'invention, est représentée. Le disque (12) comporte une piste (14) dotée de cellules de codage à hologrammes diffractifs permettant une détection angulaire absolue sur un tour. D'autres cellules de codage (15) sont réparties sur la périphérie du disque, et permettent un codage radial permettant la mesure du faux-rond. Ces cellules de codage (15), identiques, comportent également un hologramme diffractif, diffractant le faisceau incident (11) en des taches lumineuses alignées. Une modulation sous formes de rayures (16) module ce signal, selon la position relative du faisceau incident (11) et de la cellule (15), par rotation de l'alignement des taches d'axe situé au centre de la tache lumineuse d'ordre 0. Le diaphragme (17) délimite le faisceau incident (11) de telle sorte que, selon l'amplitude du faux-rond, le faisceau collimaté a une position qui varie par rapport auxdites rayures (16). Le suivi du déplacement d'une des taches (de préférence d'ordre supérieur ou égal à 1) permet d'évaluer ledit faux-rond. Cette tache effectue en toute rigueur une rotation, que l'on peut cependant assimiler à une translation à l'échelle de la cellule (15) et du déplacement relatif correspondant du faisceau incident collimaté (11). Un photodétecteur spécifique (non représenté) est prévu pour effectuer la mesure du déplacement radial correspondant.

Ces cellules (15) pourraient comporter, à la place d'un hologramme, un réseau, ne faisant pas partie de l'invention.

## Revendications

**1.** Dispositif de détection du faux-rond sur un capteur d'angle comportant un disque support de moyens de codage angulaire solidaire d'un arbre tournant et un système optique fixe comportant une source de lumière cohérente émettant un faisceau interférant avec les moyens de codage angulaire du disque support en vue de coder sa position angulaire, des moyens de collimation dudit faisceau avant interférence et un photodétecteur du faisceau modulé après interférence, **caractérisé en ce que** le disque comporte une piste circulaire composée de cellules de codage à hologrammes diffractifs bidimensionnels générés par ordinateur et générant sur chaque cellule un code angulaire invariant dans une direction tangentielle au déplacement du disque, et un code radial différant selon le positionnement radial du faisceau de lumière relativement à ladite piste.

**2.** Dispositif de détection du faux-rond selon la revendication précédente, **caractérisé en ce que** chaque cellule est subdivisée, dans une direction radiale, en n secteurs produisant des codes radiaux distincts.

**3.** Dispositif de détection du faux-rond selon l'une quelconque des revendications précédentes **caractérisé en ce que** le disque du capteur d'angle est fixé à une colonne de direction de véhicule automobile.

## Patentansprüche

**1.** Vorrichtung zur Detektion eines Rundlauffehlers an einem Winkelsensor, enthaltend eine Trägerscheibe zum Tragen von Winkelcodiereinrichtungen, die fest mit einer drehbaren Welle verbunden ist, und ein festes, optisches System, das eine kohärente Lichtquelle aufweist, die einen Lichtstrahl emittiert, der mit den Winkelcodiereinrichtungen der Trägerscheibe interferiert, um deren Winkelposition zu codieren, sowie Kollimationseinrichtungen zur Kollimation mit dem Lichtstrahl vor dem Interferieren und einen Fotodetektor für den nach dem Interferieren modulierten Lichtstrahl, **dadurch gekennzeichnet, dass** die Scheibe eine kreisförmige Spur aufweist, die sich aus Codierzellen mit computererzeugten, diffraktiven, zweidimensionalen Hologrammen zusammensetzt und an jeder Zelle einen unveränderlichen Winkelcode in einer Richtung tangential zur Verlagerung der Scheibe und einen radialen Code erzeugt, der sich je nach radialer Stellung des Lichtstrahls bezüglich der Spur unterscheidet.

**2.** Vorrichtung zur Detektion eines Rundlauffehlers nach dem vorangehenden Anspruch, **dadurch gekennzeichnet, dass** jede Zelle in einer radialen Richtung in n Sektoren unterteilt ist, welche verschiedene radiale Codes erzeugen.

**3.** Vorrichtung zur Detektion eines Rundlauffehlers nach einem der vorangehenden Ansprüche, **da-**

**durch gekennzeichnet, dass** die Scheibe des Winkelsensors an eine Kraftfahrzeug-Lenksäule befestigt ist.

## Claims

1. Device for detecting eccentricity, in an angle sensor comprising a disc that is a holder of angular coding means, which disc is securely fastened to a rotating shaft, and a stationary optical system comprising a coherent light source emitting a beam that interferes with the angular coding means of the holder disc with a view to coding its angular position, means for collimating said beam before interference and a photodetector for detecting the modulated beam after interference, **characterized in that** the disc comprises a circular track composed of coding cells containing computer-generated two-dimensional diffractive holograms generating, in each cell, an angular code that is invariant in a direction tangential to the movement of the disc, and a radial code that differs depending on the radial position of the beam of light relative to said track.

2. Device for detecting eccentricity according to the preceding claim, **characterized in that** each cell is subdivided, in a radial direction, into n segments producing different radial codes.

3. Device for detecting eccentricity according to either one of the preceding claims, **characterized in that** the disc of the angle sensor is fastened to an automotive vehicle steering column.

Fig. 1

EP 1 862 771 B1

Fig. 2

Fig. 3

Fig. 4

Fig. 5

Codage angulaire

Codage radial

Fig. 6

11

17

12

15

14

16